# FASCICULE DE BREVET EUROPEEN

(11) **EP 2 179 776 B1**
(45) Date de publication et mention de la délivrance du brevet: **02.09.2015**
(21) Numéro de dépôt: 09305972.3
(22) Date de dépôt: 13.10.2009
(51) Int. Cl.: B01D 53/047

(54) **Repressurisation d'un VSA CO2 traitant un mélange gazeux comprenant un combustible**
Druckwiederaufbau einer CO2-VSA-Einheit, die ein Gasgemisch aufbereitet, in dem ein Brennstoff enthalten ist
Re-pressurisation of a CO2-VSA treating a gaseous mix containing a fuel

(30) Priorité: 21.10.2008 FR 0857133
(43) Date de publication de la demande: 28.04.2010
(73) Titulaire: L'AIR LIQUIDE, SOCIETE ANONYME POUR L'ETUDE ET L'EXPLOITATION DES PROCEDES GEORGES CLAUDE, 75007 Paris (FR)
(72) Inventeur: Monereau, Christian, 75011 Paris (FR); Gueret, Vincent, 75014 Paris (FR); Haik-Beraud, Natacha, 94500 Champigny-sur-Marne (FR); Berthelemot, Anne, 75015 Paris (FR)
(74) Mandataire: Conan, Philippe Claude

(56) Documents cités:
- EP-A- 0 640 376
- EP-A- 0 678 322
- WO-A1-2007/066141
- GB-A- 1 059 974
- US-A- 4 725 381
- US-A- 5 415 682
- US-A1- 2007 183 909
- US-A1- 2008 072 752
- CLIVE TUNNA: "Pumping potentially explosive atmospheres", THE CHEMICAL ENGINEER, 1 May 2005 (2005-05-01), pages 30-31, XP055017885,
- LOIS J. RIPPER: VAKUUM IN DER PRAXIS, 1 March 1994 (1994-03-01), pages 91-100, XP055017888,

## Description

L'invention concerne l'amélioration de la sécurité des procédés de séparation ou purification d'un mélange gazeux, par adsorption et comportant une régénération sous vide. Plus généralement, elle concerne les VSA ou VPSA dont l'alimentation comprend au moins un constituant pouvant donner un mélange combustible avec de l'air, tel que l'hydrogène, le monoxyde de carbone, hydrocarbures...

L'invention concerne les procédés de séparation du CO₂.

L'augmentation de température moyenne observée depuis le début de l'ère industrielle se caractérise par sa rapidité. Ses conséquences potentielles, de l'élévation du niveau des mers à la désertification, même si elles ne sont pas toutes connues et quantifiées, font l'objet d'une prise de conscience mondiale. S'il ne peut être prouvé avec certitude que le changement climatique a pour cause les émissions anthropiques de gaz à effet de serre, les corrélations sont suffisamment fortes pour que l'on fasse jouer le principe de précaution. Sachant que les émissions de CO₂ contribuent pour environ 50% au potentiel de réchauffement, il est évidemment pertinent d'étudier tous les moyens de réduire ces émissions. La première approche est logiquement de chercher à réduire la production de CO₂ en diminuant la consommation énergétique. La capture de CO₂ à l'émission est une deuxième approche complémentaire dès lors que le stockage de CO₂ est définitif Il est à noter que plus de 50% des émissions de CO₂ sont le fait de la production d'électricité et de l'industrie. Ce sont des sources intenses mais relativement peu nombreuses et donc éligibles pour un procédé de capture. Plus précisément, les cibles retenues seront les centrales thermiques à charbon ou fuel lourd, les centrales thermiques à gazéification, et les usines de production des matériaux de base : acier (gaz de haut fourneau...), métaux divers, chimie de base (produit secondaire de la fabrication de NH3..), ciment (gaz de four à chaux..).

La génération d'hydrogène ou de gaz de synthèse à partir de sources riches en carbone peut également générer des flux contenant une quantité appréciable de CO₂ (reformage à la vapeur d'hydrocarbures..). On peut encore citer comme sources contenant du CO₂, les biogaz ou gaz issu de déchets, certains gaz naturels.

Une partie au moins du CO₂ capturé peut être utilisée dans l'industrie soit directement, soit après un post-traitement destiné par exemple à améliorer sa pureté (CO₂ alimentaire par exemple) ou à permettre son stockage (liquéfaction...).

L'absorption du CO₂ dans les amines est une technique éprouvée et efficace.

Cependant la pénalité énergétique liée à la désorption des amines est un facteur important qui rend aujourd'hui cette technique difficilement attractive. L'adsorption est un très bon candidat à cause des grandes sélectivités d'arrêt entre d'une part le CO₂ et d'autre part, les autres gaz présents (H₂, N₂, CO, CH₄...). Parmi les procédés par adsorption, les procédés de type TSA (Temperature Swing Adsorption) ont le même inconvénient que les procédés par absorption, à savoir que la régénération de l'adsorbant nécessite un apport d'énergie important sous forme d'élévation de température. Le procédé PSA par contre ne nécessite pas d'apport extérieur d'énergie -sous forme de chaleur ou de substance extérieure (vapeur...)- mais utilise la détente de gaz pour régénérer l'adsorbant.

La question principale est alors de concevoir un procédé PSA adapté pour l'objectif visé de capture du CO₂.

Afin d'arriver à un procédé de capture économiquement acceptable, l'unité PSA en question doit être optimisée, en fonction de la source à capter, par le choix judicieux :
- du cycle de fonctionnement de l'unité (dit cycle de pression) ;
- du ou des adsorbants et de leur arrangement ;
- de la technologie des adsorbeurs ;
- de l'intégration de la dite unité dans l'ensemble industriel.

L'état de la technique relatif aux cycles PSA et susceptible d'être utilisé pour la capture du CO₂ est très développé dans la littérature. En effet les unités PSA (pressure swing adsorption = adsorption à variation de pression), qui ont une régénération à pression supérieure à la pression atmosphérique, les unités VSA (vacuum swing adsorption = adsorption avec mise sous vide), qui ont une adsorption proche de la pression atmosphérique, généralement de 1 à 2 bar abs et une régénération sous vide, et les unités VPSA (vacuum pressure swing adsorption = adsorption avec variation de pression et mise sous vide), qui ont une adsorption à moyenne pression, généralement comprise entre 2 et 10 bar abs et une régénération sous vide, ont déjà été extensivement étudiées pour différents types de séparation : production d'hydrogène de haute pureté, d'oxygène et/ou d'azote à partir de l'air, de méthane à partir de mélange CH₄/ CO₂, de CO à partir de gaz de synthèse....

Par la suite, nous utiliserons le terme VSA pour tout cycle comportant une phase de régénération sous vide.

Les procédés par adsorption tels que PSA ou VSA sont constitués à partir d'étapes élémentaires bien connues : adsorption (adsorption step), équilibrage de pression (balancing steps), récupération de gaz d'élution (purge providing), dépressurisation (blow-down), élution (purge) et/ou mise sous vide pour les VSA, recompression (repressurisation), balayage sous pression (rinse).

Ces étapes sont décrites dans divers ouvrages sur l'adsorption tel par exemple « Pressure Swing Adsorption » de Ruthven, Farooq et Knaebel.

Ces étapes peuvent s'enchaîner ou pour certaines être simultanées...

A titre d'exemple, le document EP 1 004 343 décrit un cycle pour les PSA H2 avec deux niveaux de pression de régénération à 4 adsorbeurs et un équilibrage.

Le document EP 1 095 689 divulgue un cycle à deux adsorbeurs développés pour la production d'oxygène à partir d'air, cycle comportant une recompression avec le gaz non adsorbé, un équilibrage, une recompression finale avec le gaz de charge, une étape de production, une étape de décompression en partie à l'aide d'une pompe à vide ainsi qu'une phase d'élution.

Le document US 4 840 647 divulgue un cycle à 2 adsorbeurs particulièrement adapté à la capture d'un constituant facilement adsorbable comme le CO₂.

Le document EP 1 023 934 décrit un cycle de type PSA H2 avec recycle d'une partie du gaz résiduaire basse pression vers le gaz à traiter.

Le document US 6,287,366 divulgue un cycle VSA 02 illustrant les étapes combinées telles que dépressurisation simultanée par les deux côtés de l'adsorbeur et repressurisation avec deux fluides distincts.

Une majorité des cycles décrits est orientée vers la production du ou des gaz les moins adsorbables, les gaz les plus adsorbables constituants le gaz résiduaire. Ce type de cycles peut néanmoins être utilisé pour la capture du CO₂. Dans ce cas, le PSA sera par exemple réglé sur la teneur en CO₂ dans les gaz légers.

Le document US 2007/0261551 relatif à la séparation CH₄/ CO₂ donne comme exemple un cycle de type PSA H2 avec une phase d'adsorption à la haute pression, deux équilibrages, une décompression co-courant avec récupération de gaz d'élution, une dépressurisation finale, une étape d'élution à la basse pression avec le gaz récupéré précédemment et du gaz produit et une recompression finale avec le gaz d'alimentation et le gaz produit.

Ce type de cycle peut éventuellement être amélioré avec l'adjonction d'étapes plus spécifiques à la production du gaz le plus adsorbable, c'est-à-dire ici le CO₂. Ces étapes additionnelles sont essentiellement des étapes de recyclage d'une partie du gaz issu de la décompression dans le gaz d'alimentation ou directement dans un autre adsorbeur. On peut également introduire une étape d'élution avec un gaz extérieur tel que de l'azote par exemple.

Le document US 4,077,779 décrit un cycle à 4 ou 6 adsorbeurs comportant le recyclage d'une partie du gaz de décompression vers un autre adsorbeur, ainsi qu'une étape d'élution avec un gaz externe au PSA. Ce document précise que ce cycle peut être utilisé aussi bien pour la production d'hydrogène que pour la séparation méthane/ CO₂.

L'état de la technique décrit aussi des cycles destinés à extraire du CO d'un gaz de synthèse. Dans ce cas, le CO est le gaz le plus facilement adsorbable sur un adsorbant qui lui est spécifique. Ce type de cycle est directement transposable à l'arrêt du CO₂ contenu dans des gaz essentiellement moins adsorbables après changement d'adsorbants.

Des procédés VSA-CO₂ sont connus de US 4,725,381 et de US 2008/0072752 qui divulguent le préambule de la revendication 1.

En résumé, les cycles PSA déjà développé pour différentes applications peuvent être utilisés tels quels ou avec quelques modifications telles en particulier que des recyclages d'une partie des gaz produits dans les étapes de décompression soit vers le feed, soit vers un autre adsorbeur.

Les procédés par adsorption sont d'autant plus efficaces que la régénération s'effectue en basse pression. C'est particulièrement vrai lorsque l'adsorbant adsorbe fortement un constituant. C'est le cas avec le CO₂ dès lors qu'on utilise par exemple des zéolites A ou X. Dans ces conditions, les VSA ont généralement un meilleur rendement que les PSA. Cet intérêt pour le VSA peut être encore accentué lorsque le gaz d'alimentation se trouve disponible en basse ou moyenne pression. L'utilisation du vide pour régénérer peut alors permettre de traiter le gaz de charge directement à sa pression de disponibilité sans avoir à le comprimer préalablement.

L'invention qui va être décrite porte uniquement sur les unités comportant au moins une étape sous vide, c'est-à-dire pendant laquelle l'adsorbant est soumis à une pression inférieure à la pression atmosphérique locale.

Il est classique en cas d'arrêt d'une telle unité d'isoler le VSA du reste de l'installation. Par arrêt, on entend soit arrêt volontaire programmé à l'avance - par exemple pour maintenance d'une partie de l'usine-, soit arrêt d'urgence suite à un incident sur le VSA lui-même ou toute autre partie de l'usine. Cela se fait généralement en fermant les vannes des adsorbeurs. De façon plus précise, on peut isoler l'unité VSA des circuits amont et aval en fermant les vannes de procédé servant à effectuer le cycle - par exemple en fermant chaque vanne d'alimentation, de production, d'off-gas- ou bien en fermant des vannes spécifiques d'isolation situées sur les circuits d'alimentation, de production, d'off-gas...On peut -ou pas-suivant le cas laisser ouvertes des vannes entre adsorbeurs, par exemple les vannes d'équilibrage de pression ou une vanne de repressurisation...Dans tous les cas, on isole des circuits amont et aval, c'est-à-dire du reste de l'usine, un ou des volumes comprenant le ou les adsorbeurs ainsi que les volumes gazeux correspondant aux collecteurs et tuyauteries jusqu'aux vannes faisant isolation. On appellera gaz interne, le volume gazeux contenu dans ce système clos et gaz externe ou extérieur, tout gaz en dehors de ce système.

Dans l'hypothèse de perte d'étanchéité vis-à-vis de l'extérieur, il convient d'éviter des entrées d'air dans un adsorbeur sous vide qui renfermerait également du CO et de l'hydrogène. En effet, même si globalement la composition moyenne des gaz contenus dans l'adsorbeur peut ne pas présenter de danger, localement il en est généralement différent. On va par exemple avoir des mélanges gazeux riches en hydrogène côté production (sortie du gaz décarbonaté) puisque la majorité du CO₂ aura été arrêtée précédemment. La nature combustible de l'adsorbant, par exemple s'il s'agit de charbon actif, peut alors aggraver la situation.

Pour palier ce risque, il est coutume d'équilibrer entre eux les adsorbeurs d'un VSA isolé du reste de l'installation comme cité au dessus. Cela peut se faire par exemple par les vannes servant à équilibrer les adsorbeurs entre eux. Dans ce cas, immédiatement après -ou simultanément avec- l'isolation du VSA, toutes les vannes d'équilibrage de l'unité sont ouvertes.

Généralement l'équilibrage de pression entre adsorbeurs permet d'atteindre une pression moyenne supérieure à la pression atmosphérique. Ceci peut être différent lorsqu'on traite dans un VSA un gaz contenant du CO₂. Il se trouve que le CO₂ s'adsorbe fortement même à faible pression et que son isotherme est fortement courbée. En équilibrant 2 adsorbeurs de volume identique l'un en basse pression BP, l'autre à plus haute pression HP, on obtient une pression d'équilibrage plus proche de la basse pression. Un équilibrage entre adsorbeurs ne permet donc pas toujours de les ramener au dessus de la pression atmosphérique. Dans le cas de pur VSA, c'est-à-dire avec une adsorption juste au dessus de la pression atmosphérique, il y a également un risque important que l'unité d'adsorption se retrouve après isolement en dépression. On notera en particulier que l'arrêt de l'unité en cas d'incident peut se produire n'importe quand dans le cycle : on parle dans ce cas de déclenchement. Lors d'un arrêt programmé, on peut au contraire choisir d'arrêter l'unité dans une position plus favorable, par exemple attendre la fin d'une étape de repressurisation. Le cas de déclenchement conduit normalement à des situations dans lesquelles l'unité VSA se retrouve assez systématiquement en dépression. En cas de perte d'étanchéité sur une bride ou une vanne par exemple, il y aura donc entrée d'air et risque d'obtention localement au moins d'atmosphère inflammable.

Un risque du même ordre existe au niveau de la pompe à vide, en particulier vers la fin du pompage quand les pressions dans la machine sont minimales. Son isolement en cas de déclenchement de l'unité, conduit à une pression moyenne inférieure à la pression atmosphérique.

En effet, les pompes à vide utilisées sur les VSA comportent un, deux ou trois étages de pompage essentiellement en série. La pression d'aspiration initiale est généralement approximativement la pression atmosphérique et cette pression descend au cours du cycle jusqu'à la basse pression du cycle. La pression de refoulement de la pompe à vide est généralement voisine de la pression atmosphérique. Dans le cas de pompe à plusieurs étages, les pressions intermédiaires vont varier au cours du cycle.

On pourra par exemple avoir l'aspiration d'un premier étage à 0.1 bar abs, son refoulement et l'aspiration du second étage autour de 0.25 bar abs, le refoulement du second étage et l'aspiration du troisième à environ 0.6 bar abs et enfin le refoulement du troisième étage à pression atmosphérique. Le premier étage étant une machine plus grosse que celle du second et encore plus du troisième, en cas de déclenchement et d'isolement de la pompe à vide, la pression moyenne va s'établir autour de 0.3 bar abs.

Une telle pompe à vide comporte de nombreuses vannes et brides et est donc sujette aux entrées d'air atmosphérique.

Partant de là, un problème qui se pose est de fournir un procédé de purification ou de séparation ne présentant pas le risque d'obtenir localement une atmosphère inflammable.

Une solution de l'invention est un procédé de purification ou de séparation d'un mélange gazeux 1 comprenant au moins un combustible, mettant en oeuvre une unité présentant au moins un adsorbeur 4 soumis à un cycle de pression comportant au moins une étape de mise sous vide à l'aide d'une pompe à vide 9, **caractérisé en ce qu**'au moins la pompe à vide 9, dépressurisée au cours du cycle, est repressurisée par au moins en partie un gaz extérieur à ladite unité et ne renfermant pas de comburant en quantité suffisante pour créer un mélange inflammable lors de cette repressurisation.

On dira par la suite que la « pompe à vide » est dépressurisée dès lors qu'une des parties du système constituant la pompe à vide se trouve à une pression inférieure à la pression atmosphérique. Cette partie sera notamment l'entrée (aspiration) de la pompe à vide.

L'invention concerne un procédé VSA CO₂ selon la revendication 1.

Selon le cas, le procédé selon l'invention peut présenter une ou plusieurs des caractéristiques suivantes :
- la pompe à vide 9, dépressurisée au cours du cycle, est repressurisée à une pression égale ou supérieure à la pression atmosphérique ;
- la repressurisation de la pompe à vide dépressurisée par ledit gaz extérieur s'effectue préférentiellement en moins de 10 secondes, encore préférentiellement en moins de 5 secondes ;
- au moins un adsorbeur 4, dépressurisé au cours du cycle, est repressurisé par au moins en partie ledit gaz extérieur ;
- le combustible est choisi parmi l'hydrogène H₂, le monoxyde de carbone CO, le méthane CH4 et les hydrocarbures ;
- le gaz extérieur est choisi parmi du mélange gazeux stocké 20, un gaz issu d'une étape de dépressurisation, dudit cycle de pression, et stocké 30, du gaz épuré et stocké 40, et de l'azote provenant d'une capacité 50 sous pression ou d'une unité de séparation des gaz de l'air 51 ou un mélange de ces gaz ;
- le mélange gazeux comprend du dioxyde de carbone (CO₂), du monoxyde de carbone (CO), de l'azote (N₂) et de l'hydrogène (H₂) et le gaz extérieur est du gaz enrichi en CO₂ issu d'une étape de dépressurisation dudit cycle de pression ;
- au moins un adsorbeur 11 du VSA est repressurisé, après l'arrêt de l'unité, jusqu'à au moins la pression atmosphérique, à l'aide d'un premier volume 30a dudit gaz, extérieur à ladite unité et ne renfermant pas de comburant en quantité suffisante pour créer un mélange inflammable lors de cette repressurisation ; ledit volume 30a étant stocké dans un gazomètre 30 placé au refoulement de la pompe à vide 9 ;
- la pompe à vide 9 est repressurisée, après l'arrêt de l'unité et/ou à la fin de chaque étape de mise sous vide, jusqu'à la pression atmosphérique à l'aide d'un second volume 30b dudit gaz, extérieur à ladite unité et ne renfermant pas de comburant en quantité suffisante pour créer un mélange inflammable lors de cette repressurisation ; ledit volume 30b étant stocké dans un gazomètre placé au refoulement de la pompe à vide ;
- le gazomètre 30 renferme, pendant le fonctionnement de l'unité, un volume de sécurité égal au premier volume de gaz 30a ;
- la pompe à vide 9 est repressurisée en moins de 5 secondes, de préférence en moins d'une seconde ;
- la repressurisation de la pompe à vide 9 et préférentiellement d'au moins un adsorbeur 11, à partir du volume de sécurité est déclenchée manuellement ou automatiquement à chaque risque d'entrée d'air ;
- le CO₂ issu du VSA est conditionné en bouteille ou alimente une canalisation de CO₂ pour un usage industriel ou un stockage en sous-sol directement ou après un traitement complémentaire, préférentiellement après un traitement cryogénique.

On entend par « pompe à vide » n'importe quel système permettant d'abaisser la pression dans l'adsorbeur. Il peut s'agir indifféremment de machine centrifuge, de type machine volumique à pistons rotatifs, ventilateur, ou d'éjecteur... Elle peut être constituée de plusieurs étages de pompage en série ou en parallèle.

Le gaz extérieur, permettant de repressuriser un élément dépressurisé du système, est de préférence choisi parmi du mélange gazeux stocké 20, un gaz issu de l'étape de dépressurisation, comprimé et stocké 30, de l'azote provenant d'une capacité 50 sous pression ou d'une unité de séparation des gaz de l'air 51.

Ceci permet, contrairement à l'état de la technique qui ne comprendrait pas ce moyen additionnel, de repressuriser rapidement le système.

En effet, il n'est généralement pas possible de repressuriser l'unité rapidement en prélevant du gaz directement sur le circuit d'alimentation en gaz, sur le circuit de gaz épuré ou sur le circuit de gaz enrichi en CO₂. En effet, le volume de gaz contenu dans les tuyauteries est faible par rapport à la quantité de gaz nécessaire et procéder de la sorte conduirait à mettre sous vide une partie de ces circuits et se faisant d'augmenter les risques d'entrée d'air.

Une solution de l'invention consiste donc à associer au système un stockage de gaz disponible pour repressuriser au moins une partie du système (adsorbeurs, pompe à vide) et ne renfermant pas de comburant en quantité suffisante pour créer un mélange inflammable lors de l'étape de repressurisation.

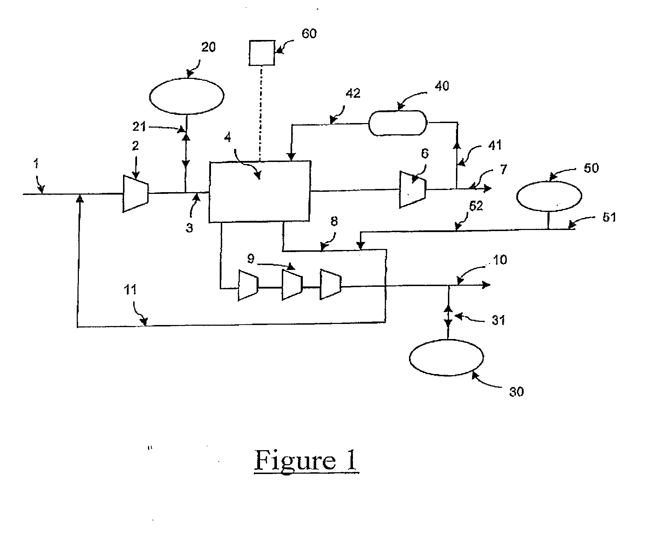

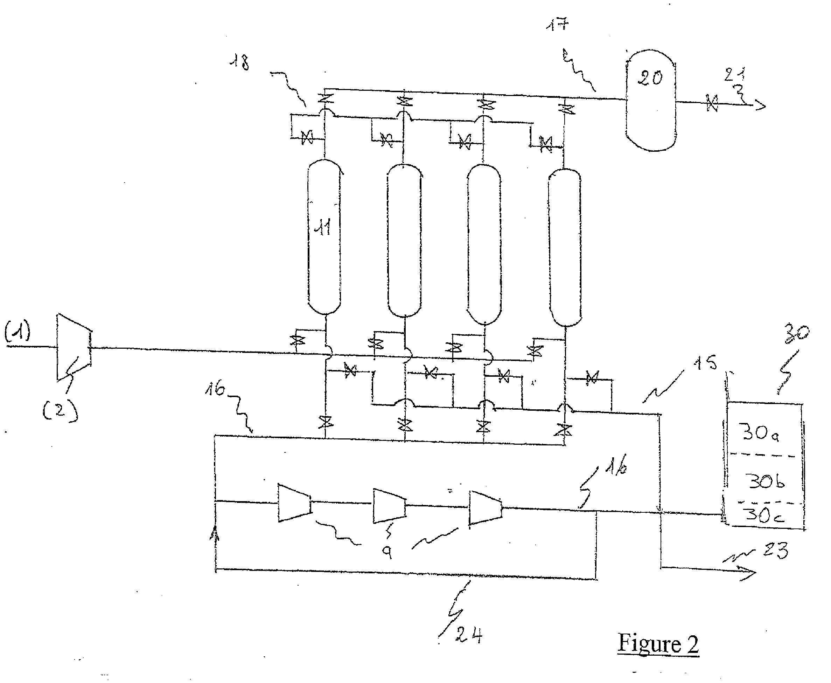

L'invention va être décrite plus en détail à partir des figures 1 et 2.

La figure 1 décrit un système destiné à retirer l'essentiel du CO₂ d'un mélange gazeux comprenant, par exemple 40 % mole de CO₂, 40 % mole de CO, 10 % de N₂ et 10% de H₂.

Le gaz de charge 1 disponible à une pression proche de la pression atmosphérique, est surpressé de quelques centaines de millibars via un compresseur 2 et alimente 3 un adsorbeur de l'unité VSA 4. Le gaz décarbonaté 5, c'est-à-dire contenant en pratique de quelques dizaines de ppm à moins de 5% de CO₂ suivant les applications est comprimé via un compresseur 6 et alimente 7 l'unité aval. Le résiduaire sous pression est d'abord extrait via le collecteur 8 puis par l'intermédiaire de la pompe à vide 9. Une fraction de ce résiduaire est recyclé dans l'alimentation 11 alors que l'autre fraction est extraite 10 pour être valorisée ou séquestrée.

Le gaz stocké pour repressuriser au moins un adsorbeur et/ ou la pompe à vide dépressurisé peut être :
- du gaz d'alimentation stocké à l'aide d'un moyen de stockage 20 et des moyens de transfert 21 associés,
- du gaz enrichi en CO₂ issu de la dépressurisation finale ou du pompage stocké à l'aide d'un moyen de stockage 30 et des moyens de transfert 31 associés,
- du gaz partiellement épuré en CO₂, stocké à l'aide d'un moyen de stockage 40 et des moyens de transfert 41 et 42, et/ou
- de l'azote.

Dans ce dernier cas, l'azote peut provenir d'un stockage 50 à proximité du système, ou directement d'une unité de séparation des gaz de l'air 51. Il pourra alors s'agir du résiduaire disponible en basse pression en grande quantité.

Les dits stockages de gaz pourront être de type gazomètre, c'est-à-dire que le gaz est stocké à pression atmosphérique (en pratique en légère surpression de quelques millibars à quelques dizaines de millibars suivant la technologie du gazomètre). Lorsque les gaz sont disponibles sous pression, on pourra utiliser de simples capacités.

Sur la Figure 1, on a supposé que les stockages 20, 30, 50 étaient de type gazomètre alors que le stockage de gaz épuré était de type capacité.

Le système est équipée d'un système de contrôle commande 60. Lorsqu'un paramètre important (pression, température, débit, composition, position d'une vanne...) sort de sa plage normale de valeur, l'unité se met en sécurité en s'arrêtant automatiquement. Si un risque d'entrée d'air dans le système a été détecté, par exemple présence d'oxygène dans le flux issu de la pompe à vide ou pression anormale..., le système de sécurité provoque l'injection de gaz inerte dans l'unité à partir d'un des moyens de stockage de gaz 20, 30, 40 et/ou 50 et de transfert 21, 31, 42, 52 prévus à cet effet. Cette injection peut être également déclenchée systématiquement à chaque arrêt de l'unité. Ce choix peut être effectué lors de la conception de l'usine, en particulier après une étude de risques.

Par « gaz inerte » on entend un gaz ne renfermant pas de comburant en quantité suffisante pour créer un mélange inflammable lors de l'étape de repressurisation.

Cette repressurisation de l'unité à pression atmosphérique stoppe automatiquement toute possibilité d'entrée d'air supprimant ainsi tout risque de création de mélange inflammable.

La possibilité d'injecter rapidement un gaz inerte au niveau de la pompe à vide permet également dans un certain nombre de cas de diminuer la consommation énergétique. Il va alors être intéressant d'utiliser systématiquement cette possibilité au cours des cycles normaux du VSA. Ceci va être explicité à partir d'un cycle VPSA CO₂ à 4 adsorbeurs tel que représenté figure 2.

Le gaz à traiter 1 est comprimé à 4 bars abs à l'amont du VPSA via un compresseur 2.

Le gaz à traiter comprimé est ensuite introduit dans un adsorbeur 11 dans le but de retenir le CO₂. Le gaz produit est dirigé via le collecteur 17 vers une capacité de production 200 dans le double but de stockage (pour permettre l'envoi d'un débit constant vers l'utilisateur 221 et de mélange (afin d'avoir une production de teneur sensiblement constante au cours du cycle). Quand la teneur en CO₂ -moyenne ou instantanée- atteint un seuil prédéterminé (par exemple de 0.5 à 5% en moyenne dans la capacité suivant les marches), l'adsorbeur est isolé et commence son cycle de régénération. La phase suivante consiste à effectuer 2 décompressions successives la première à co-courant et la seconde à contre-courant : le gaz issu de la première sous étape sert à repressuriser un adsorbeur déjà régénéré (équilibrage via le collecteur 18) pendant que la deuxième sous étape qui consiste en une dépressurisation jusqu'à la pression atmosphérique fournit une partie du gaz riche en CO₂ 15. La 3^{ème} phase correspond à l'étape de pompage sous vide via la pompe à vide 9 reliée au VPSA par la ligne 16. La pression minimale dépend des performances demandées au VPSA. Elle peut varier de 0.30 à 0.05 bar abs suivant les conditions de fonctionnement. La pression finale visée peut être obtenue en jouant sur la vitesse de pompage - si la machine est équipée d'un variateur de vitesse- mais plus généralement en adaptant le temps de pompage. Le pompage s'effectue par l'intermédiaire de 3 étages de « blowers » (machine volumique à pistons rotatifs) installés en série. Comme réalisé classiquement sur les VSA 02, le cycle peut comporter un temps mort pour que la phase de pompage ait la même durée que les autres phases constitutives du cycle même si l'étape de pompage effectif est de durée plus courte. Le gaz extrait par la pompe à vide constitue la fraction 16bis. Ce fluide peut être mélangé avec le fluide 15 pour constituer la production de CO₂ et être dirigé vers le réseau aval 23. La quatrième phase est une phase de recompression, d'abord grâce à une étape d'équilibrage (cf. phase 2), ensuite par le gaz produit décarbonaté.

Le cycle du VPSA peut donc se représenter comme suit :

| | | |
|---|---|---|
| 1^{ère} phase | Adsorption CO₂ | Adsorption CO₂ + repressurisation |
| 2^{ème} phase | Equilibrage 1 | Décompression à P atmosphérique |
| 3^{ème} phase | Pompage sous vide | Pompage sous vide |
| 4^{ème} phase | Equilibrage 1 | Repressurisation |

De façon plus précise, la 3^{ème} phase de pompage peut comprendre un ou deux temps morts additionnels en début et/ou fin d'étape et peut donc se représenter comme suit :

| | | | | |
|---|---|---|---|---|
| 3^{ème} phase | Temps mort (TM1) | Pompage sous vide | Pompage sous vide | Temps mort (TM2) |

Le temps mort initial (TM1) sert essentiellement aux marches réduites, c'est-à-dire à adapter la durée de la 3^{ème} phase. Le deuxième temps mort permet d'adapter le temps de pompage à la pression basse recherchée. Comme pour la majorité des unités de type PSA, il est classique d'adapter le temps de phase au débit traité. Par exemple si on traite 50% du débit nominal, le temps d'adsorption sera de 2 minutes au lieu de 1 minute. La durée de pompage effectif restera approximativement constante, mettons de 55 secondes plus ou moins 5 secondes. Dans ce cas, pour effectuer la marche réduite à 50%, on adoptera un premier temps mort TM1 de 55 seconde par exemple, le deuxième temps mort TM2 qui permet comme on l'a dit de réguler la pression basse du cycle variera entre 5 et 15secondes.

Pour limiter la consommation énergétique pendant les temps morts, il est coutumier de « repressuriser » la pompe à vide de telle sorte que les blower (machine volumique à pistons rotatifs) fassent juste circuler le gaz sans travail de compression. L'énergie ne sert alors qu'à vaincre les frottements et les pertes de charge. Cette repressurisation doit se faire très rapidement pour permettre un gain appréciable vue la courte durée des temps morts. Il n'est pas recommandé de repressuriser avec de l'air comme il peut être effectué sur les VSA 02 pour des problèmes de sécurité (présence de gaz combustible) au niveau de la pompe à vide ou de l'adsorbeur, en cas de défaut sur une vanne (admission d'air alors que la vanne de l'adsorbeur sous vide n'est pas totalement fermée). Il est donc également intéressant pour cette raison de pouvoir injecter très rapidement un gaz ne contenant pas d'oxygène à l'aspiration de la pompe à vide. De plus, il faut éviter de mettre l'aspiration de la machine en surpression par rapport à son refoulement, la machine pouvant partir alors en survitesse et être très sérieusement endommagée.

Dans le cas du VSA CO₂ décrit précédemment, la solution préférentielle consiste à installer un gazomètre 30 au refoulement de la pompe à vide comme représenté sur la figure 2. Ce gazomètre permet de stocker à une pression légèrement supérieure à la pression atmosphérique (quelques dizaines de millibars au dessus) un volume de gaz 30a permettant si nécessaire de repressuriser au moins jusqu'à la pression atmosphérique le VSA comme décrit dans l'exemple précédent. Le gaz exempt d'oxygène et plus généralement de comburant peut être introduit dans l'unité via le circuit 15 qui sert normalement à la dépressurisation. Le gazomètre contient en outre le volume de gaz 30b permettant à chaque cycle de remonter la pression de la pompe à vide 22 jusqu'à la pression atmosphérique et ce pour économiser de l'énergie comme expliqué précédemment. Cette repressurisation peut s'effectuer via le circuit de refoulement 16 de la pompe à vide et son by-pass 24. Le gazomètre peut également comprendre un volume de stockage 30c de gaz, volume variable le long du cycle, pour permettre d'en extraire un débit essentiellement constant. En effet, le débit d'entrée est généralement variable pendant le cycle de fonctionnement du PSA. La pompe à vide étant généralement de type volumétrique, le débit est important au début du pompage et diminue lorsque la pression d'aspiration diminue.

La régulation du gazomètre va être telle que le volume de sécurité 30a soit conservé en permanence pour être disponible en cas de nécessité. Cette régulation peut par exemple se traduire par l'existence d'un niveau bas L1 et d'un niveau très bas L2. En fonctionnement normal, le gazomètre « régule entre un niveau haut H1 et le niveau bas L1. Le volume de gaz compris entre L1 et L2 est conservé à demeure dans le gazomètre à titre de sécurité. Les circuits de repressurisation mentionnés plus haut seront préférentiellement dimensionnés pour repressuriser rapidement le VSA en cas de nécessité et la pompe à vide à chaque cycle. Cette repressurisation s'effectuera préférentiellement en quelques secondes, voire en moins d'une seconde s'agissant de l'aspiration de la pompe à vide. L'intérêt d'utiliser un gazomètre comme moyen de stockage est qu'en aucun cas on ne peut repressuriser les équipements au-delà d'environ la pression atmosphérique. Il n'y a donc par exemple aucun risque de mettre l'aspiration de la pompe à vide en surpression. L'installation d'un gazomètre est la solution privilégiée mais elle peut parfois être difficile à mettre en oeuvre (gros volume, conditions climatiques extrêmes...). Il est possible de stocker le volume de gaz nécessaire aux repressurisations (de sécurité et/ou pour économiser l'énergie nécessaire à la pompe à vide) dans un stockage sous pression. Le dimensionnement de ce stockage et/ou la régulation de la repressurisation devront alors être étudiés avec soin pour éviter des problèmes potentiels de sur-repressurisation (mise en survitesse de la pompe à vide par exemple). Des solutions hybrides sont bien sûr possibles. Dans la majorité des cas, un gaz issu du PSA peut être utilisé pour repressuriser rapidement l'unité sans risque de former des mélanges combustibles voire détonnant. Un gaz extérieur peut néanmoins être utilisé comme de l'azote. Il peut s'agir d'azote d'inertage à quelques bars de pression ou le cas échéant d'azote résiduaire d'une unité voisine de séparation des gaz de l'air.

La repressurisation du VSA à partir du gaz de sécurité peut être déclenchée manuellement, par exemple à l'aide d'un bouton d'urgence, ou automatiquement. Elle peut-être systématique à chaque déclenchement de l'unité ou au contraire être déclenchée par des capteurs spécifiques permettant de mettre en évidence un risque d'entrée d'air (suivi des variations de pression, analyse en continu du gaz résiduaire avec détection d'oxygène...)

## Revendications

1. Procédé VSA CO₂ à partir d'un mélange gazeux (1) comprenant au moins un combustible, mettant en oeuvre une unité présentant au moins un adsorbeur (4) soumis à un cycle de pression comportant au moins une étape de mise sous vide à l'aide d'une pompe à vide (9), **caractérisé en ce qu'**au moins la pompe à vide (9), dépressurisée au cours du cycle, est repressurisée en moins de 30 secondes par au moins en partie un gaz extérieur à ladite unité, stocké à l'aide d'un moyen de stockage et ne renfermant pas de comburant en quantité suffisante pour créer un mélange inflammable lors de cette repressurisation, en cas d'arrêt de l'unité et lors du fonctionnement de l'unité, à chaque cycle de pression du au moins un adsorbeur.

2. Procédé selon la revendication 1, **caractérisé en ce que** la pompe à vide (9), dépressurisée au cours du cycle, est repressurisée à une pression égale ou supérieure à la pression atmosphérique.

3. Procédé selon l'une des revendications 1 ou 2, **caractérisé en ce que** la repressurisation, de la pompe à vide (9) dépressurisée, par ledit gaz extérieur s'effectue en moins de 10 secondes, encore préférentiellement en moins de 5 secondes.

4. Procédé selon l'une des revendications 1 à 3, **caractérisé en ce qu'**au moins un adsorbeur, dépressurisé au cours du cycle, est repressurisé par au moins en partie ledit gaz extérieur.

5. Procédé selon l'une des revendications 1 à 4, **caractérisé en ce que** le combustible est choisi parmi l'hydrogène H₂, le monoxyde de carbone CO, le méthane CH₄ et les hydrocarbures.

6. Procédé selon l'une des revendications 1 à 5, **caractérisé en ce que** le gaz extérieur est choisi parmi du mélange gazeux stocké (20), un gaz issu d'une étape de dépressurisation, dudit cycle de pression, et stocké (30), du gaz épuré et stocké (40), et de l'azote provenant d'une capacité (50) sous pression ou d'une unité de séparation des gaz de l'air (51) ou un mélange de ces gaz.

7. Procédé selon l'une des revendications 1 à 6, **caractérisé en ce que** le mélange gazeux comprend du dioxyde de carbone (CO₂), du monoxyde de carbone (CO), de l'azote (N₂) et de l'hydrogène (H₂) et **en ce que** le gaz extérieur est du gaz enrichi en CO₂ issu d'une étape de dépressurisation dudit cycle de pression.

8. Procédé selon la revendication 1, **caractérisé en ce qu'**au moins un adsorbeur (11) du VSA est repressurisé, après l'arrêt de l'unité, jusqu'à au moins la pression atmosphérique, à l'aide d'un premier volume (30a) dudit gaz, extérieur à ladite unité et ne renfermant pas de comburant en quantité suffisante pour créer un mélange inflammable lors de cette repressurisation ; ledit volume (30a) étant stocké dans un gazomètre (30) placé au refoulement de la pompe à vide.

9. Procédé selon l'une des revendications 1 ou 8, **caractérisé en ce que** la pompe à vide (9) est repressurisée, après l'arrêt de l'unité et/ou à la fin de chaque étape de mise sous vide, jusqu'à la pression atmosphérique à l'aide d'un second volume (30b) dudit gaz, extérieur à ladite unité et ne renfermant pas de comburant en quantité suffisante pour créer un mélange inflammable lors de cette repressurisation, ledit volume (30b) étant stocké dans un gazomètre (30) placé au refoulement de la pompe à vide (9).

10. Procédé selon l'une des revendications 8 ou 9, **caractérisé en ce que** le gazomètre (30) renferme, pendant le fonctionnement de l'unité, un volume de sécurité égal au premier volume de gaz (30a).

11. Procédé selon la revendication 9, **caractérisé en ce que** la pompe à vide (9) est repressurisée en moins de 5 secondes, de préférence en moins d'une seconde.

12. Procédé selon la revendication 10, **caractérisé en ce que** la repressurisation de la pompe à vide (9) et préférentiellement d'au moins un adsorbeur (11) à partir du volume de sécurité est déclenchée manuellement ou automatiquement à chaque risque d'entrée d'air.

13. Procédé selon l'une des revendications 1 à 12, **caractérisé en ce que** le CO₂ issu du VSA est conditionné en bouteille ou alimente une canalisation de CO₂ pour un usage industriel ou un stockage en sous-sol directement ou après un traitement complémentaire, préférentiellement après un traitement cryogénique.

## Patentansprüche

1. CO₂-VSA-Verfahren, ausgehend von einem gasförmigen Gemisch (1), das wenigstens einen Brennstoff enthält, unter Verwendung einer Einheit, die wenigstens einen Adsorber (4) aufweist, der einem Druckzyklus mit wenigstens einem Schritt des Vakuumbeaufschlagens mittels einer Vakuumpumpe (9) ausgesetzt ist, **dadurch gekennzeichnet, dass** wenigstens die Vakuumpumpe (9), die im Laufe des Zyklus drucklos gemacht wird, in weniger als 30 Sekunden wieder unter Druck gesetzt wird, wenigstens teilweise durch ein Gas von außerhalb der Einheit, das mit Hilfe eines Speichermittels gespeichert wird und keinen die Verbrennung bewirkenden oder fördernden Stoff in ausreichender Menge enthält, um ein bei diesem Wiederunterdrucksetzen entzündliches Gemisch zu erzeugen, für den Fall des Anhaltens der Einheit und beim Betrieb der Einheit, bei jedem Druckzyklus des wenigstens einen Adsorbers.

2. Verfahren nach Anspruch 1, **dadurch gekennzeichnet, dass** die Vakuumpumpe (9), die im Laufe des Zyklus drucklos gemacht wird, wieder unter einen Druck gesetzt wird, der größer oder gleich dem atmosphärischen Druck ist.

3. Verfahren nach einem der Ansprüche 1 oder 2, **dadurch gekennzeichnet, dass** das Wiederunterdrucksetzen der drucklos gemachten Vakuumpumpe (9) durch das Gas von außerhalb in weniger als 10 Sekunden, vorzugsweise in weniger als 5 Sekunden erfolgt.

4. Verfahren nach einem der Ansprüche 1 bis 3, **dadurch gekennzeichnet, dass** wenigstens ein Adsorber, der im Laufe des Zyklus drucklos gemacht wird, wenigstens teilweise durch das Gas von außerhalb wieder unter Druck gesetzt wird.

5. Verfahren nach einem der Ansprüche 1 bis 4, **dadurch gekennzeichnet, dass** der Brennstoff ausgewählt ist aus Wasserstoff H₂, Kohlenmonoxid CO, Methan CH₄ und den Kohlenwasserstoffen.

6. Verfahren nach einem der Ansprüche 1 bis 5, **dadurch gekennzeichnet, dass** das Gas von außerhalb ausgewählt ist aus dem gespeicherten gasförmigen Gemisch (20), aus einem aus dem Schritt des Drucklosmachens des Druckzyklus hervorgegangenen und gespeicherten Gas (30), aus gereinigtem und gespeichertem Gas (40) und aus Stickstoff, der aus einem unter Druck stehenden Behälter (50) oder aus einer Einheit zur Trennung der Gase von der Luft (51) oder aus einem Gemisch dieser Gase stammt.

7. Verfahren nach einem der Ansprüche 1 bis 6, **dadurch gekennzeichnet, dass** das gasförmige Gemisch Kohlendioxid (CO₂), Kohlenmonoxid (CO), Stickstoff (N₂) und Wasserstoff (H₂) enthält und dass das Gas von außerhalb mit CO₂ angereichertes Gas ist, das aus einem Schritt des Drucklosmachens des Druckzyklus hervorgegangen ist.

8. Verfahren nach Anspruch 1, **dadurch gekennzeichnet, dass** wenigstens ein Adsorber (11) nach dem Anhalten der Einheit wieder auf wenigstens den atmosphärischen Druck gesetzt wird mit Hilfe eines ersten Volumens (30a) des Gases, das von außerhalb der Einheit ist und keinen die Verbrennung bewirkenden oder fördernden Stoff in ausreichender Menge enthält, um ein bei diesem Wiederunterdrucksetzen entzündliches Gemisch zu erzeugen; wobei das Volumen (30a) in einem Gasbehälter (30) gespeichert wird, der an der Auslassöffnung der Vakuumpumpe platziert ist.

9. Verfahren nach einem der Ansprüche 1 oder 8, **dadurch gekennzeichnet, dass** die Vakuumpumpe (9) nach dem Anhalten der Einheit und/oder am Ende jedes Schritts des Vakuumbeaufschlagens wieder auf wenigstens den atmosphärischen Druck gesetzt wird mit Hilfe eines zweiten Volumens (30b) des Gases, das von außerhalb der Einheit ist und keinen die Verbrennung bewirkenden oder fördernden Stoff in ausreichender Menge enthält, um ein bei diesem Wiederunterdrucksetzen entzündliches Gemisch zu erzeugen, wobei das Volumen (30b) in einem Gasbehälter (30) gespeichert wird, der an der Auslassöffnung der Vakuumpumpe (9) platziert ist.

10. Verfahren nach einem der Ansprüche 8 oder 9, **dadurch gekennzeichnet, dass** der Gasbehälter (30) während des Betriebs der Einheit ein Sicherheitsvolumen umschließt, das dem ersten Gasvolumen (30a) gleich ist.

11. Verfahren nach Anspruch 9, **dadurch gekennzeichnet, dass** die Vakuumpumpe (9) in weniger als 5 Sekunden, vorzugsweise in weniger als einer Sekunde wieder unter Druck gesetzt wird.

12. Verfahren nach Anspruch 10, **dadurch gekennzeichnet, dass** das Wiederunterdrucksetzen der Vakuumpumpe (9) und vorzugsweise wenigstens eines Adsorbers (11) ausgehend von dem Sicherheitsvolumen bei jedem Risiko eines Lufteintritts manuell oder automatisch ausgelöst wird.

13. Verfahren nach einem der Ansprüche 1 bis 12, **dadurch gekennzeichnet, dass** das aus dem VSA stammende CO₂ in Flaschen abgefüllt wird oder eine CO₂-Leitung für eine industrielle Verwendung oder eine unterirdische Speicherung direkt oder nach einer zusätzlichen Behandlung, vorzugsweise nach einer Tieftemperaturbehandlung, versorgt.

## Claims

1. Method for CO₂ vacuum swing adsorption (VSA) from a gaseous mixture (1) comprising at least one fuel, using a unit having at least one adsorber (4) subjected to a pressure cycle comprising at least one step of applying a vacuum using a vacuum pump (9), **characterised in that** at least the vacuum pump (9), which is depressurised during the cycle, is repressurised in less than 30 seconds at least in part by a gas which is external to said unit, is stored using a storage means and does not contain a sufficient amount of fuel to create an inflammable mixture during this repressurisation, in the event of shutdown of said unit and during operation of said unit, during each pressure cycle of the at least one adsorber.

2. Method according to claim 1, **characterised in that** the vacuum pump (9), depressurised during the cycle, is repressurised to a pressure equal to or higher than atmospheric pressure.

3. Method according to either claim 1 or claim 2, **characterised in that** said repressurisation of the depressurised vacuum pump (9) by said external gas occurs in less than 10 seconds, and more preferably in less than 5 seconds.

4. Method according to any of claims 1 to 3, **characterised in that** at least one adsorber, depressurised during said cycle, is repressurised at least in part by said external gas.

5. Method according to any of claims 1 to 4, **characterised in that** said fuel is selected from hydrogen H₂, carbon monoxide CO, methane CH₄ and hydrocarbons.

6. Method according to any of claims 1 to 5, **characterised in that** said external gas is selected from a stored gaseous mixture (20), a stored gas (30) originating from a depressurisation step of said pressure cycle, a purified and stored gas (40), and nitrogen originating from a pressurised tank (50) or a unit for separating the gases of the air (51) or a mixture of these gases.

7. Method according to any of claims 1 to 6, **characterised in that** said gaseous mixture comprises carbon dioxide (CO₂), carbon monoxide (CO), nitrogen (N₂) and hydrogen (H₂), and **in that** said external gas is CO₂ enriched gas originating from a depressurisation step of said pressure cycle.

8. Method according to claim 1, **characterised in that** at least one adsorber (11) of the VSA is repressurised, after the shutdown of the unit, at least to atmospheric pressure, using a first volume (30a) of said gas which is external to said unit and does not contain a sufficient amount of fuel to create an inflammable mixture during said repressurisation, said volume (30a) being stored in a gas holder (30) placed at the vacuum pump discharge point.

9. Method according to either claim 1 or claim 8, **characterised in that** said vacuum pump (9) is repressurised, after the shutdown of said unit and/or at the end of each step of applying a vacuum, to atmospheric pressure using a second volume (30b) of said gas which is external to said unit and does not contain a sufficient amount of fuel to create an inflammable mixture during said repressurisation, said volume (30b) being stored in a gas holder (30) placed at the vacuum pump (9) discharge point.

10. Method according to either claim 8 or claim 9, **characterised in that**, during the operation of said unit, said gas holder (30) contains a security volume equal to the first volume of gas (30a).

11. Method according to claim 9, **characterised in that** said vacuum pump (9) is repressurised in less than 5 seconds, preferably in less than one second.

12. Method according to claim 10, **characterised in that** said repressurisation of said vacuum pump (9), and preferably of at least one adsorber (11), from said security volume is triggered manually or automatically for each risk of air ingress.

13. Method according to any of claims 1 to 12, **characterised in that** the CO₂ originating from the VSA is packed into cylinders or is fed to a CO₂ line for industrial use or for underground storage, directly or after supplementary treatment, preferably after a cryogenic treatment.
